# FASCICULE DE BREVET EUROPEEN

(11) **EP 3 378 830 B1**
(45) Date de publication et mention de la délivrance du brevet: **16.10.2019**
(21) Numéro de dépôt: 18305310.7
(22) Date de dépôt: 21.03.2018
(51) Int. Cl.: C01B 39/48

(54) **PROCEDE DE SYNTHESE DE LA ZEOLITHE IZM-2 EN PRESENCE D'UN STRUCTURANT DIBROMURE DE 1,6-BIS(METHYLPIPERIDINIUM)HEXANE**
SYNTHESEVERFAHREN VON IZM-2-ZEOLITH IN GEGENWART VON 1,6-BIS(METHYLPIPERIDINIUM)HEXAN DIBROMID ALS STRUKTURBILDNER
METHOD FOR SYNTHESISING ZEOLITE IZM-2 IN THE PRESENCE OF 1,6-BIS(METHYLPIPERIDINIUM)HEXANE DIBROMIDE AS A STRUCTURE DIRECTING AGENT

(30) Priorité: 24.03.2017 FR 1752473
(43) Date de publication de la demande: 26.09.2018
(73) Titulaire: IFP Energies nouvelles, 92852 Rueil-Malmaison Cedex (FR)
(72) Inventeur: MARTINEZ FRANCO, Raquel, 69360 ST SYMPHORIEN D'OZON (FR); BATS, Nicolas, 69360 SAINT SYMPHORIEN D'OZON (FR)
(74) Mandataire: IFP Energies nouvelles

(56) Documents cités:
- EP-B1- 2 170 769
- JON H ET AL: "Effects of structure-directing agents on hydrothermal conversion of FAU type zeolite", ZEOLITES AND RELATED MATERIALS: TRENDS, TARGETS AND CHALLENGES - PROCEEDINGS OF THE 4TH INTERNATIONAL FEZA CONFERENCE 2008; 20080902 TO 20080906; PARIS, FRANCE; [STUDIES IN SURFACE SCIENCE AND CATALYSIS ISSN 0167-2991], AMSTERDAM [U.A.] : ELSEVIER, 2, vol. 174B, 1 janvier 2008 (2008-01-01), pages 229-232, XP008185769, DOI: 10.1016/S0167-2991(08)80184-X

## Description

### Domaine technique

La présente invention se rapporte à un nouveau procédé de préparation d'un solide cristallisé microporeux, appelé solide microporeux IZM-2 ou zéolithe IZM-2. Ce nouveau procédé consiste à réaliser la synthèse de la zéolithe IZM-2 par conversion/transformation sous conditions hydrothermales d'une zéolithe de type structural FAU. En particulier, ledit nouveau procédé consiste à réaliser la synthèse d'une zéolithe IZM-2 à partir d'une zéolithe de type structural FAU utilisée comme source de silicium et d'aluminium et d'une molécule organique ou structurant spécifique comportant deux fonctions ammonium quaternaire, le dibromure de 1,6-bis(méthylpiperidinium)hexane. Ledit solide microporeux IZM-2 obtenue selon le procédé de l'invention trouve avantageusement son application en tant que catalyseur, adsorbant ou agent de séparation.

### Art antérieur

Les matériaux microporeux cristallisés, tels que les zéolithes ou les silicoaluminophosphates, sont des solides très utilisés dans l'industrie pétrolière en tant que catalyseur, support de catalyseur, adsorbant ou agent de séparation. Bien que de nombreuses structures cristallines microporeuses aient été découvertes, l'industrie du raffinage et de la pétrochimie est toujours à la recherche de nouvelles structures zéolitiques qui présentent des propriétés particulières pour des applications comme la purification ou la séparation des gaz, la conversion d'espèces carbonées ou autres.

La zéolithe IZM-2 est un solide ayant une structure inconnue. Des réactions modèles ont été employées (isomérisation et dismutation méta-xylènes et l'isomérisation-hydrocraquage de n-décane) dans l'objective de prédire la topologie du matériau microporeux IZM-2 (Fecant et al. dans J.Catal., 20, (2013) 20-29). Les résultats obtenus pour ces réactions, permettent de penser que la structure du matériau IZM-2 est constituée de deux types de taille de pores (10-MR et 12-MR).

La zéolithe IZM-2 a été synthétisée dans sa forme aluminosilicate (Fecant et al. US8361435 B2) et sous sa forme purement silicique (Li et al. dans Microporous Mesoporous Mater., 237 (2017) 222-227), en utilisant l'ion ammonium quaternaire 1,6-bis(méthylpiperidinium)hexane comme structurant, sous sa forme hydroxyde et bromure.

En règle générale, les zéolithes sont préparées par traitement hydrothermal d'un gel aqueux contenant une source de silicium et aluminium amorphe, un agent minéralisant et un agent structurant (Cundy et al. dans Microporous Mesoporous Mater., 82 (2005) 1). Récemment, un nouveau mode opératoire de synthèse de zéolithe a été décrit. Celui-ci permet de préparer des structures zéolitiques par synthèse hydrothermale en utilisant comme source de réactif au moins une structure zéolitique, qui sera transformée en une autre zéolithe au cours du processus de synthèse. Sano et al. dans J.Jpn.Pet.Inst., 56 (2013) 183-197 propose de réaliser la synthèse d'une zéolithe de type structural BEA, RUT, CHA, LEV à partir d'une zéolithe de type structural FAU en utilisent comme molécule organique le TEAOH (hydroxyde de tétra éthyle ammonium), TMAOH (hydroxyde de tétra méthyl ammonium), BTMAOH (hydroxyde de benzyle tri méthyl ammonium), Cholite (hydroxy de choline), respectivement; Shi et al. dans Microporous Mesoporous Mater., 200 (2014) 269-278 propose de réaliser la synthèse d'une zéolithe de type structural MWW à partir d'une zéolithe de type structural FAU en utilisent comme molécule organique le HMI (hexamethyleneimine); Goel et al. dans Chem. Mater., 27 (2015) 2056-2066 propose de réaliser la synthèse d'une zéolithe de type structural MFI à partir d'une zéolithe de type structural FAU et aussi d'une zéolithe de type structural BEA en utilisent comme molécule organique TPABr (bromure de tétrapropylammonium).

En ce qui concerne l'IZM-2, les seules méthodes connues de sa préparation consiste à effectuer un traitement hydrothermal d'un gel aqueux contenant une source de silicium et aluminium amorphe, un métal alcalino-terreux (Na₂O) et un agent structurant (1,6-bis(méthylpiperidinium)hexane).

La demanderesse a découvert un nouveau procédé de préparation d'une zéolithe IZM-2 par conversion/transformation sous conditions hydrothermales d'une zéolithe de type structural FAU, en présence d'un composé organique azoté ou structurant spécifique, le 1,6-bis(méthylpiperidinium)hexane sous sa forme dibromure.

En particulier, la demanderesse a découvert que le composé organique azoté ou structurant 1,6-bis(méthylpiperidinium)hexane sous sa forme dibromure, mis en mélange avec une zéolithe de type structural FAU ayant un ratio molaire SiO₂ _{(FAU)}/Al₂O_{3(FAU)} supérieur ou égal à 30, utilisée comme source de silicium et d'aluminium, en présence ou pas, d'un apport supplémentaire, au sein dudit mélange, d'au moins une source d'au moins un élément tétravalent XO₂, et au moins une source d'au moins un métal alcalin et/ou alcalino-terreux M de valence n, conduit à la production d'un gel précurseur de zéolithe IZM-2 présentant un ratio molaire de la quantité totale d'élément tétravalent/Al₂O₃ compris entre 10 et 800, la quantité totale d'élément tétravalent représentant la somme de la teneur en SiO₂ provenant de la zéolithe FAU et de la teneur en XO₂ provenant de la source additionnelle d'un oxyde XO₂, dans le cas où un ajout d'au moins une source additionnelle d'un oxyde XO₂ est réalisé, puis à la production d'une zéolithe IZM-2 de haute pureté. Toute autre phase cristallisée ou amorphe est généralement et très préférentiellement absente du solide cristallisé constitué de zéolithe IZM-2 obtenue à l'issue du procédé de préparation.

### Description de l'invention

La présente invention a donc pour objet un nouveau procédé de préparation d'une zéolithe IZM-2 comprenant au moins les étapes suivantes :
i) le mélange en milieu aqueux, d'au moins une zéolithe de type structural FAU ayant un ratio molaire SiO_{2(FAU)}/Al₂O_{3(FAU)} supérieur ou égal à 30, éventuellement d'au moins une source additionnelle d'un oxyde XO₂ de sorte que le ratio molaire XO₂/SiO_{2(FAU)} soit compris entre 0 et 4, au moins un composé organique azoté R, R étant le dibromure de 1,6-bis(méthylpiperidinium)hexane, au moins un métal alcalin et/ou un métal alcalino-terreux M de valence n, n étant un entier supérieur ou égal à 1, le mélange présentant la composition molaire suivante :

| | |
|---|---|
| (XO₂ + SiO_{2(FAU)})/Al₂O_{3(FAU)} | compris entre 10 et 800, |
| H₂O/(XO₂ + SiO_{2(FAU)}) | compris entre 1 et 100, |
| R/(XO₂ + SiO_{2(FAU)}) | compris entre 0,01 à 0,6, |
| M_{2/n}O/(XO₂ + SiO_{2(FAU)}) | compris entre 0,005 à 0,35, |

dans laquelle X est un ou plusieurs élément(s) tétravalent(s) choisi(s) dans le groupe formé par les éléments suivants : silicium, germanium, titane, SiO₂ _{(FAU)} étant la quantité de SiO₂ apportée par la zéolithe FAU, et Al₂O_{3(FAU)} étant la quantité de Al₂O₃ apportée par la zéolithe FAU,
ii) le traitement hydrothermal dudit mélange obtenu à l'issue de l'étape i) à une température comprise entre 120°C et 200°C pendant une durée comprise entre 1 jour et 10 jours, jusqu'à ce que ladite zéolithe IZM-2 se forme.

Un avantage de la présente invention est donc de fournir un nouveau procédé de préparation permettant la formation d'une zéolithe IZM-2 de haute pureté à partir d'une zéolithe de type structural FAU, ledit procédé étant mis en oeuvre en présence d'un structurant organique spécifique, le dibromure de 1,6-bis(méthylpiperidinium)hexane.

Un autre avantage de la présente invention est de de fournir un nouveau procédé de préparation d'un gel précurseur de zéolithe IZM-2 présentant un ratio molaire SiO₂/Al₂O₃ identique ou supérieur au ratio molaire SiO_{2(FAU}/Al₂O_{3(FAU)} de la zéolithe de type structural FAU de départ. Le procédé de préparation selon l'invention permet donc d'ajuster le ratio SiO₂/Al₂O₃ du gel précurseur d'IZM-2 obtenu en fonction de l'apport supplémentaire ou pas, au sein du mélange réactionnel d'au moins une source d'au moins un élément tétravalent XO₂.

### Description détaillée de l'invention

La présente invention a pour objet un procédé de préparation d'une zéolithe IZM-2 par la conversion/transformation hydrothermale d'une zéolithe de type structural FAU comprenant au moins les étapes suivantes :
i) le mélange en milieu aqueux, d'au moins une zéolithe de type structural FAU ayant un ratio molaire SiO_{2(FAU}/Al₂O_{3(FAU)} supérieur ou égal à 30, éventuellement d'au moins une source additionnelle d'un oxyde XO₂ de sorte que le ratio molaire XO₂/SiO_{2(FAU)} soit compris entre 0 et 4, au moins un composé organique azoté R, R étant le dibromure de 1,6-bis(méthylpiperidinium)hexane, au moins un métal alcalin et/ou un métal alcalino-terreux M de valence n, n étant un entier supérieur ou égal à 1, le mélange présentant la composition molaire suivante :

| | |
|---|---|
| (XO₂ + SiO_{2 (FAU)})/Al₂O_{3(FAU)} | compris entre 10 et 800, |
| H₂O/(XO₂ + SiO_{2(FAU)}) | compris entre 1 et 100, |
| R/(XO₂ + SiO_{2(FAU)}) | compris entre 0,01 à 0,6, |
| M_{2/n}O/(XO₂ + SiO_{2(FAU)}) | compris entre 0,005 à 0,35, |

dans laquelle X est un ou plusieurs élément(s) tétravalent(s) choisi(s) dans le groupe formé par les éléments suivants : silicium, germanium, titane, SiO₂ _{(FAU)} étant la quantité de SiO₂ apportée par la zéolithe FAU, et Al₂O_{3(FAU)} étant la quantité de Al₂O₃ apportée par la zéolithe FAU,
ii) le traitement hydrothermal dudit mélange obtenu à l'issue de l'étape i) à une température comprise entre 120°C et 200°C pendant une durée comprise entre 1 jour et 10 jours, jusqu'à ce que ladite zéolithe IZM-2 se forme.

Conformément à l'invention, une zéolithe de type structural FAU ayant un ratio molaire SiO_{2(FAU}/Al₂O_{3(FAU)} supérieur ou égal à 30 de préférence compris entre 30 et 100 et de manière préférée compris entre 30 et 80, est incorporée dans le mélange pour la mise en oeuvre de l'étape (i) comme source d'élément silicium et aluminium. De préférence, ladite zéolithe de type structural FAU est la zéolithe Y.

Conformément à l'invention, la source d'élément aluminium est apportée dans le mélange pour la mise en oeuvre de ladite étape (i) du procédé de préparation selon l'invention, par la zéolithe de type structural FAU qui est utilisée comme source d'élément silicium et aluminium.

Conformément à l'invention, R est le composé organique azoté R, R étant le dibromure de 1,6-bis(méthylpiperidinium)hexane, ledit composé étant incorporé dans le mélange pour la mise en oeuvre de l'étape (i), comme structurant organique. L'anion associé aux cations ammoniums quaternaires présents dans l'espèce organique structurante pour la synthèse du solide cristallisé IZM-2 selon l'invention est l'anion bromure.

Conformément à l'invention, au moins une source d'au moins un métal alcalin et/ou alcalino-terreux M de valence n, n étant un entier supérieur ou égal à 1, de préférence choisi parmi le lithium, le potassium, le sodium, le magnésium et le calcium et le mélange d'au moins deux de ces métaux, et de manière préférée le sodium, est mis en oeuvre dans le mélange de l'étape i). De préférence, la source d'au moins un métal alcalin et/ou alcalino-terreux M est l'hydroxyde de sodium.

Conformément à l'invention, éventuellement au moins une source additionnelle d'un oxyde XO₂, X étant un ou plusieurs élément(s) tétravalent(s) choisi(s) dans le groupe formé par les éléments suivants : silicium, germanium, titane, et de préférence le silicium, de sorte que le ratio molaire XO₂/SiO_{2(FAU)} soit compris entre 0 et 4, et de préférence entre 0 et 3, la teneur en SiO₂ dans ledit ratio étant apportée par la zéolithe FAU est mis en oeuvre dans le mélange de l'étape i).

L'ajout ou pas d'au moins une source additionnelle d'un oxyde XO₂ permet donc d'ajuster le ratio SiO₂/Al₂O₃ du gel précurseur d'IZM-2 obtenu à l'issue de l'étape i) de mélange dans le cas où X=Si.

La ou les source(s) du(es)dit(s) élément(s) tétravalent(s) peu(ven)t être tout composé comprenant l'élément X et pouvant libérer cet élément en solution aqueuse sous forme réactive. Lorsque X est le titane, on utilise avantageusement Ti(EtO)₄ comme source de titane. Dans le cas préféré où X est le silicium, la source de silicium peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX HS-40.

Conformément à l'invention, le mélange réactionnel obtenu à l'étape (i) présente la composition molaire suivante :

| | |
|---|---|
| (XO₂ + SiO_{2 (FAU)})/Al₂O_{3(FAU)} | compris entre 10 et 800, de préférence entre 20 et 600 et de manière préférée entre 25 et 450 et de manière plus préférée entre 30 et 450, |
| H₂O/(XO₂ + SiO_{2(FAU)}) | compris entre 1 et 100, de préférence entre 10 et 70, et de manière préférée entre 15 et 55 |
| R/(XO₂ + SiO_{2(FAU)}) | compris entre 0,01 à 0,6, de préférence entre 0,05 et 0,45 , et de manière préférée entre 0,085 et 0,4 |
| M_{2/}O/(XO₂ + SiO_{2(FAU)}) | compris entre 0,005 à 0,35, de préférence entre 0,008 et 0,3, et de manière préférée entre 0,01 et 0,25 |

dans laquelle R et M ont la même définition que précédemment et dans laquelle X est un ou plusieurs élément(s) tétravalent(s) choisi(s) dans le groupe formé par les éléments suivants : silicium, germanium, titane, de préférence le silicium, XO₂ étant la quantité d'au moins une source additionnelle d'un oxyde XO₂, SiO₂ _{(FAU)} étant la quantité de SiO₂ apportée par la zéolithe FAU, et Al₂O_{3(FAU)} étant la quantité de Al₂O₃ apportée par la zéolithe FAU.

Dans un mode de réalisation préféré, le mélange de l'étape i) peut également contenir au moins une source d'anion fluorure BF choisie parmi les sels de fluor dans lequel B est un cation choisi parmi les cations NH₄⁺, Na⁺, K⁺ et Li⁺, et l'acide fluorhydrique en solution aqueuse.

De préférence, la source d'au moins un anion fluorure est le NH₄F en solution aqueuse.

Dans le mode de réalisation préféré ou le mélange de l'étape i) contient également au moins une source d'anion fluorure, le mélange réactionnel présente la composition molaire suivante :

| | |
|---|---|
| (XO₂ + SiO_{2 (FAU)})/Al₂O_{3(FAU)} | compris entre 10 et 800, de préférence entre 200 et 340, |
| H₂O/(XO₂ + SiO_{2(FAU)}) | compris entre 1 et 100, de préférence entre 10 et 70, |
| R/(XO₂ + SiO_{2(FAU)}) | compris entre 0,01 à 0,6, de préférence entre 0,05 et 0,45, |
| M_{2/n}O/(XO₂ + SiO_{2(FAU)}) | compris entre 0,005 à 0,35, de préférence entre 0,01 et 0,3, |
| BF/(XO₂ + SiO_{2(FAU)}) | compris entre 0,01 à 0,33, de préférence entre 0,01 et 0,25, |

dans laquelle X, M, BF, Al₂O_{3(FAU)}, SiO_{2(FAU)} et XO₂ ont la définition précitée.

L'étape (i) du procédé selon l'invention consiste à préparer un mélange réactionnel aqueux appelé gel précurseur de la zéolithe IZM-2 et renfermant au moins une zéolithe de type structural FAU, éventuellement une source d'un oxyde XO₂, au moins un composé organique azoté R, R étant le dibromure de 1,6-bis(méthylpiperidinium)hexane en présence d'au moins une source d'un ou plusieurs métal(aux) alcalin(s) et/ou alcalino-terreux M. Les quantités desdits réactifs sont ajustées de manière à conférer à ce gel une composition permettant sa cristallisation en une zéolithe IZM-2.

Il peut être avantageux d'additionner des germes de zéolithe IZM-2 au mélange réactionnel au cours de ladite étape i) du procédé de l'invention afin de réduire le temps nécessaire à la formation des cristaux de zéolithe IZM-2 et/ou la durée totale de cristallisation. Lesdits germes favorisent également la formation de ladite zéolithe IZM-2 au détriment d'impuretés. De tels germes comprennent des solides cristallisés, notamment des cristaux de zéolithe IZM-2. Les germes cristallins sont généralement ajoutés dans une proportion comprise entre 0,01 et 10 % de la masse de la source d'au moins un oxyde du ou desdits élément(s) tétravalent(s) utilisée dans le mélange réactionnel.

Conformément à l'étape (ii) du procédé selon l'invention, le gel obtenu à l'issue de l'étape i) est soumis à un traitement hydrothermal, préférentiellement réalisé à une température comprise entre 120°C et 200°C pendant une durée comprise entre 1 jour et 10 jours, jusqu'à ce que la zéolithe IZM-2 se forme. Le gel est avantageusement mis sous conditions hydrothermales sous une pression de réaction autogène, éventuellement en ajoutant du gaz, par exemple de l'azote, à une température de préférence comprise entre 120°C et 195°C, de préférence entre 150°C et 195°C, jusqu'à la formation des cristaux de zéolithe IZM-2. La durée nécessaire pour obtenir la cristallisation varie selon l'invention entre 1 jour et 10 jours, de préférence entre 2 jours et 9 jours et de manière plus préférée entre 3 jours et 8 jours. La mise en réaction s'effectue généralement sous agitation ou en absence d'agitation, de préférence en présence d'agitation.

A la fin de la réaction, lorsque ladite zéolithe IZM-2 est formée à la suite de la mise en oeuvre de ladite étape ii) du procédé de préparation selon l'invention, la phase solide formée de la zéolithe IZM-2 est de préférence filtrée, lavée puis séchée. Le séchage est généralement réalisé à une température comprise entre 20 et 150°C, de préférence entre 60 et 100°C, pendant une durée comprise entre 5 et 24 heures. La zéolithe séchée peut ensuite être avantageusement calcinée. La zéolithe IZM-2, calcinée, est généralement analysée par diffraction des rayons X, cette technique permettant également de déterminer la pureté de ladite zéolithe obtenue par le procédé de l'invention. De manière très avantageuse, le procédé de l'invention conduit à la formation d'une zéolithe IZM-2, en l'absence de toute autre phase cristallisée ou amorphe. Ladite zéolithe, après l'étape de séchage, est ensuite prête pour des étapes ultérieures telles que la calcination et l'échange d'ions. Pour ces étapes, toutes les méthodes conventionnelles connues de l'Homme du métier peuvent être employées.

L'étape de calcination de la zéolithe IZM-2 obtenue selon le procédé de l'invention est préférentiellement réalisée à une température comprise entre 500 et 700°C pendant une durée comprise entre 5 et 20 heures. La zéolithe IZM-2 obtenue à l'issue de l'étape de calcination est dépourvue de toute espèce organique et en particulier du structurant organique R.

A l'issue de ladite étape de calcination, la diffraction des rayons X permet de vérifier que le solide obtenu par le procédé selon l'invention est bien de la zéolithe IZM-2. Le solide obtenu présente le diagramme de diffraction de rayons X incluant au moins les raies inscrites dans le tableau 1.

Ce diagramme de diffraction est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ (dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. Le diagramme de diffraction des rayons X du solide cristallisé IZM-2 selon l'invention comporte au moins les raies aux valeurs de dₕₖₗ données dans le tableau 1. Dans la colonne des dₙₖₗ, on a indiqué les valeurs moyennes des distances inter-réticulaires en Angströms (Å). Chacune de ces valeurs doit être affectée de l'erreur de mesure Δ(dₕₖₗ) comprise entre ± 0,6Å et ± 0,01 Ä.

**Tableau 1 : Valeurs moyennes des dₕₖₗ et intensités relatives mesurées sur un diagramme de diffraction de rayons X du solide cristallisé IZM-2 calciné**

| 2 thêta (°) | dₕₖₗ(Å) | Iᵣₑₗ | 2 thêta (°) | dₕₖₗ(Å) | Iᵣₑₗ |
|---|---|---|---|---|---|
| 7,23 | 12,21 | mf | 24,34 | 3,65 | ff |
| 7,60 | 11,62 | mf | 25,78 | 3,45 | ff |
| 8,70 | 10,16 | f | 26,36 | 3,38 | ff |
| 12,09 | 7,32 | ff | 26,64 | 3,34 | mf |
| 14,56 | 6,08 | ff | 27,74 | 3,21 | ff |
| 14,73 | 6,01 | ff | 28,46 | 3,13 | ff |
| 15,25 | 5,80 | ff | 29,30 | 3,05 | ff |
| 17,88 | 4,96 | ff | 32,90 | 2,72 | ff |
| 18,88 | 4,70 | ff | 35,67 | 2,51 | ff |
| 21,00 | 4,23 | FF | 36,09 | 2,49 | ff |
| 21,77 | 4,08 | mf | 36,51 | 2,46 | ff |
| 22,01 | 4,03 | mf | 38,40 | 2,34 | ff |
| 23,01 | 3,86 | F | 42,47 | 2,13 | ff |
| 23,44 | 3,79 | f | 44,48 | 2,04 | ff |

| | | | | | |
|---|---|---|---|---|---|
| où FF = très fort ; F = fort ; m = moyen ; mf = moyen faible ; f = faible ; ff = très faible. L'intensité relative Iᵣₑₗ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85. | | | | | |

Il est également avantageux d'obtenir la forme hydrogène de la zéolithe IZM-2 obtenue par le procédé selon l'invention. Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium. L'échange d'ions peut être effectué par mise en suspension de ladite zéolithe IZM-2 en une ou plusieurs fois avec la solution d'échange d'ions. Ladite zéolithe peut être calcinée avant ou après l'échange d'ions, ou entre deux étapes d'échange d'ions. La zéolithe est, de préférence, calcinée avant l'échange d'ions, afin d'éliminer toute substance organique incluse dans la porosité de la zéolithe, dans la mesure où l'échange d'ions s'en trouve facilité.

La zéolithe IZM-2 obtenue par le procédé de l'invention peut être utilisée après échange ionique comme solide acide pour la catalyse dans les domaines du raffinage et de la pétrochimie. Elle peut également être utilisée comme adsorbant pour le contrôle de la pollution ou comme tamis moléculaire pour la séparation.

Par exemple, lorsqu'elle est utilisée comme catalyseur, la zéolithe préparée selon le procédé de l'invention, est calcinée, échangée et est de préférence sous forme hydrogène, et peut être associée à une matrice inorganique, qui peut être inerte ou catalytiquement active, et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation importante de coke. Des matrices inorganiques typiques sont notamment des matières de support pour les catalyseurs comme la silice, les différentes formes d'alumine, la magnésie, la zircone, les oxydes de titane, de bore, de titane, de zirconium, les phosphates d'aluminium, les argiles kaoliniques, les bentonites, les montmorillonites, la sépiolite, l'attapulgite, la terre à foulon, les matières poreuses synthétiques comme SiO₂-Al₂O₃, SiO₂-ZrO₂, SiO₂-ThO₂, SiO₂-BeO, SiO₂-TiO₂ ou toute combinaison de ces composés. La matrice inorganique peut être un mélange de différents composés, en particulier d'une phase inerte et d'une phase active.

La zéolithe préparée selon le procédé de l'invention peut également être associée à au moins une autre zéolithe et jouer le rôle de phase active principale ou d'additif.

La phase métallique est introduite sur la zéolithe seule, la matrice inorganique seule ou l'ensemble matrice inorganique-zéolithe par échange d'ions ou imprégnation avec des cations ou oxydes choisis parmi les éléments suivants : Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments. Les métaux peuvent être introduits soit tous de la même façon, soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux.

Les compositions catalytiques comportant la zéolithe IZM-2 préparée selon le procédé de l'invention, conviennent de façon générale à la mise en oeuvre des principaux procédés de transformation d'hydrocarbures et des réactions de synthèse de composés organiques tels que les éthers.

Toute méthode de mise en forme connue de l'homme du métier convient pour le catalyseur comportant la zéolithe IZM-2. On pourra utiliser, par exemple, le pastillage ou l'extrusion ou la mise sous forme de billes. La mise en forme du catalyseur contenant la zéolithe préparée selon le procédé de l'invention et se présentant au moins en partie sous forme acide est généralement telle que le catalyseur est de préférence sous forme d'extrudés ou de billes en vue de son utilisation.

L'invention est illustrée par les exemples suivants qui ne présentent, en aucun cas, un caractère limitatif.

### Exemple 1: préparation du dibromure de 1,6-bis(méthylpiperidinium)hexane (structurant RBr₂).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 h. Le mélange est ensuite refroidi à température ambiante puis filtré. Le mélange est versé dans 300 mL de diéthyléther froid puis le précipité formé est filtré et lavé avec 100 mL de diéthyléther. Le solide obtenu est recristallisé dans un mélange éthanol/éther. Le solide obtenu est séché sous vide pendant 12 h. On obtient 71 g d'un solide blanc (soit un rendement de 80 %).

Le produit possède le spectre ¹H RMN attendu. ¹H RMN (D₂O, ppm/TMS) : 1,27 (4H,m) ; 1,48 (4H,m) ; 1,61 (4H,m) ; 1,70 (8H,m) ; 2,85 (6H,s) ; 3,16 (12H,m).

### Exemple 2: préparation d'un solide IZM-2 selon l'invention.

316 mg d'une zéolithe de type structural FAU (CBV780, SiO₂/Al₂O₃=80, Zeolyst) ont été mélangés avec 7121,7 mg d'une solution aqueuse de dibromure de 1,6-bis (méthylpiperidinium) hexane (20,04 % en poids) préparéselon l'exemple 1. 3583 mg d'eau déionisée sont ajoutés au mélange précédent, la préparation obtenue est maintenue sous agitation pendant 10 minutes. 1270 mg d'une solution aqueuse à 20% en poids d'hydroxyde de sodium (98% en poids, Aldrich) sont ajoutés. Afin de favoriser la formation du solide cristallisé IZM-2, 116 mg de germes de zéolithe IZM-2 sont ajoutés dans le mélange de synthèseetmaintenu sous agitation pendant 15 minutes. Par la suite, 2116,6 mg de silice colloïdale (Ludox HS40, 40% en poids, Aldrich) sont incorporés dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,0033 Al₂O₃: 0,17 RBr₂: 0,165 Na₂O: 33,33 H₂O, soit un ratio SiO₂/Al₂O₃ de 300. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

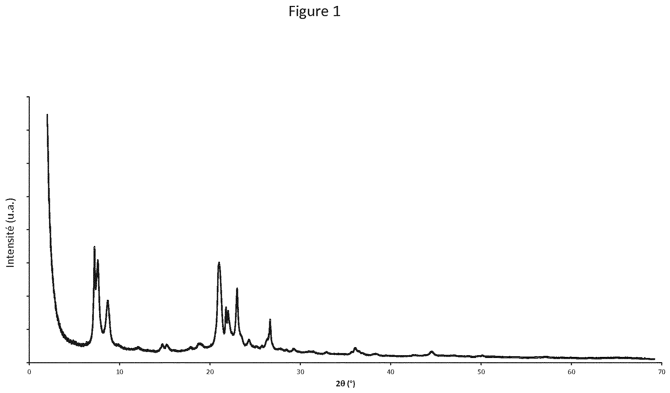

Le produit solide calciné a été analysé par diffraction des rayons X et identifié comme étant constitué de solide IZM-2. Le diagramme de diffraction effectué sur le solide IZM-2 calciné est donné sur la figure 1.

### Exemple 3: préparation d'un solide IZM-2 selon l'invention.

303 mg d'une zéolithe de type structural FAU (CBV780, SiO₂/Al₂O₃=80, Zeolyst) ont été mélangés avec 6848 mg d'une solution aqueuse de dibromure de 1,6-bis (méthylpiperidinium) hexane (20,04 % en poids) préparé selon l'exemple 1. 3682 mg d'eau déionisée sont ajoutés au mélange précédent, la préparation obtenue est maintenue sous agitation pendant 10 minutes. 925 mg d'une solution aqueuse à 20% en poids d'hydroxyde de sodium (98% en poids, Aldrich) sont ajoutés. Afin de favoriser la formation du solide cristallisé IZM-2, 112 mg de germes de zéolithe IZM-2 sont ajoutés dans le mélange de synthèse et maintenu sous agitation pendant 15 minutes. Par la suite, 2035,4 mg de silice colloïdale (Ludox HS40, 40% en poids, Aldrich) sont incorporés dans le mélange de synthèse, celui-ci est le maintenu sous agitation le temps nécessaire pour évaporer le solvant jusqu'à obtenir la concentration du gel désiré , c'est-à-dire une composition molaire du mélange suivante: 1 SiO₂: 0,0033 Al₂O₃: 0,17 RBr₂: 0,125 Na₂O: 33,33 H₂O, soit un ratio SiO₂/Al₂O₃ de 300. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 4: préparation d'un solide IZM-2 selon l'invention.

1803 mg d'une zéolithe de type structural FAU (CBV780, SiO₂/Al₂O₃=80, Zeolyst) ont été mélangés avec 20636,3 mg d'une solution aqueuse de dibromure de 1,6-bis (méthylpiperidinium) hexane (20,04 % en poids) préparé selon l'exemple 1. 11754 mg d'eau déionisée sont ajoutés au mélange précédent, la préparation obtenue est maintenue sous agitation pendant 10 minutes. 3680 mg d'une solution aqueuse à 20% en poids d'hydroxyde de sodium (98% en poids, Aldrich) sont ajoutés. Afin de favoriser la formation du solide cristallisé IZM-2, 334 mg de germes de zéolithe IZM-2 sont ajoutés dans le mélange de synthèse et maintenu sous agitation pendant 15 minutes. Par la suite, 3847,2 mg de silice colloïdale (Ludox HS40, 40% en poids, Aldrich) sont incorporée dans le mélange de synthèse, celui-ci est maintenu sous agitation le temps nécessaire pour évaporer le solvant jusqu'à obtenir la concentration du gel désiré , c'est-à-dire une composition molaire du mélange suivante: 1 SiO₂: 0,0066 Al₂O₃: 0,17 RBr₂: 0,165 Na₂O: 33,33 H₂O, soit un ratio SiO₂/Al₂O₃ de 150. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 5: préparation d'un solide IZM-2 selon l'invention.

1803 mg d'une zéolithe de type structural FAU (CBV780, SiO₂/Al₂O₃=80, Zeolyst) ont été mélangés avec 20636,3 mg d'une solution aqueuse de dibromure de 1,6-bis (méthylpiperidinium) hexane (20,04 % en poids) préparé selon l'exemple 1. 12467 mg d'eau déionisée sont ajoutés au mélange précédent, la préparation obtenue est maintenue sous agitation pendant 10 minutes. 2788 mg d'une solution aqueuse à 20% en poids d'hydroxyde de sodium (98% en poids, Aldrich) sont ajoutés. Afin de favoriser la formation du solide cristallisé IZM-2, 334 mg de germes de zéolithe IZM-2 sont ajoutés dans le mélange de synthèse et maintenu sous agitation pendant 15 minutes. Par la suite, 3847,2 mg de silice colloïdale (Ludox HS40, 40% en poids, Aldrich) sont incorporés dans le mélange de synthèse, celui-ci est maintenu sous agitation le temps nécessaire pour évaporer le solvant jusqu'à obtenir la concentration du gel désiré , c'est-à-dire une composition molaire du mélange suivante : 1 SiO₂: 0,0066 Al₂O₃: 0,17 RBr₂: 0,125 Na₂O: 33,33 H₂O, soit un ratio SiO₂/Al₂O₃ de 150. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 6: préparation d'un solide IZM-2 selon l'invention.

3005 mg d'une zéolithe de type structural FAU (CBV780, SiO₂/Al₂O₃=80, Zeolyst) ont été mélangés avec 26916,9 mg d'une solution aqueuse de dibromure de 1,6-bis (méthylpiperidinium) hexane (20,04 % en poids) préparé selon l'exemple 1. 5881 mg d'eau déionisée sont ajoutés au mélange précédent, la préparation obtenue est maintenue sous agitation pendant 10 minutes. 2439 mg d'une solution aqueuse à 20% en poids d'hydroxyde de sodium (98% en poids, Aldrich) sont ajoutés. Afin de favoriser la formation du solide cristallisé IZM-2, 300 mg de germes de zéolithe IZM-2 sont ajoutés dans le mélange de synthèse, le mélange et maintenu sous agitation le temps nécessaire pour évaporer le solvant jusqu'à obtenir la concentration du gel désirée, c'est-à-dire une composition molaire du mélange suivante: 1 SiO₂: 0,0125 Al₂O₃: 0,25 RBr₂: 0,125 Na₂O: 33,33 H₂O, soit un ratio SiO₂/Al₂O₃ de 80. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 7: préparation d'un solide IZM-2 selon l'invention.

3005 mg d'une zéolithe de type structural FAU (CBV780, SiO₂/Al₂O₃=80, Zeolyst) ont été mélangés avec 18055,9 mg d'une solution aqueuse de dibromure de 1,6-bis (méthylpiperidinium) hexane (20,04 % en poids) préparé selon l'exemple 1. 12928 mg d'eau déionisée sont ajoutés au mélange précédent, la préparation obtenue est maintenue sous agitation pendant 10 minutes. 2439 mg d'une solution aqueuse à 20% en poids d'hydroxyde de sodium (98% en poids, Aldrich) sont ajoutés. Afin de favoriser la formation du solide cristallisé IZM-2, 300 mg de germes de zéolithe IZM-2 sont rajoutés dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,0125 Al₂O₃: 0,17 RBr₂: 0,125 Na₂O: 33,33 H₂O, soit un ratio SiO₂/Al₂O₃ de 80. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 8: préparation d'un solide IZM-2 selon l'invention.

781 mg d'une zéolithe de type structural FAU (CBV720, SiO₂/Al₂O₃=30, Zeolyst) ont été mélangés avec 6076,6 mg d'une solution aqueuse de dibromure de 1,6-bis (méthylpiperidinium) hexane (20,04 % en poids) préparé selon l'exemple 1. 4203 mg d'eau déionisée sont ajoutés au mélange précédent, la préparation obtenue est maintenue sous agitation pendant 10 minutes. 548 mg d'une solution aqueuse à 20% en poids d'hydroxyde de sodium (98% en poids, Aldrich) sont ajoutés. Afin de favoriser la formation du solide cristallisé IZM-2, 103 mg de germes de zéolithe IZM-2 sont ajoutés dans le mélange de synthèse et maintenu sous agitation pendant 15 minutes. Par la suite, 610,3 mg de silice colloïdale (Ludox HS40, 40% en poids, Aldrich) ont été incorporée dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,025 Al₂O₃: 0,17 RBr₂: 0,0835 Na₂O: 33,33 H₂O, soit un ratio SiO₂/Al₂O₃ de 40. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 9: préparation d'un solide IZM-2 selon l'invention.

781 mg d'une zéolithe de type structural FAU (CBV720, SiO₂/Al₂O₃=30, Zeolyst) ont été mélangés avec 6076,6 mg d'une solution aqueuse de dibromure de 1,6-bis (méthylpiperidinium) hexane (20,04 % en poids) préparé selon l'exemple 1. 3985 mg d'eau déionisée sont ajoutés au mélange précédent, la préparation obtenue est maintenue sous agitation pendant 10 minutes. 821 mg d'une solution aqueuse à 20% en poids d'hydroxyde de sodium (98% en poids, Aldrich) sont ajoutés. Afin de favoriser la formation du solide cristallisé IZM-2, 103 mg de germes de zéolithe IZM-2 sont ajoutés dans le mélange de synthèse- et maintenu sous agitation pendant 15 minutes. Par la suite, 610,3 mg de silice colloïdale (Ludox HS40, 40% en poids, Aldrich) sont incorporés dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,025 Al₂O₃: 0,17 RBr₂: 0,125 Na₂O: 33,33 H₂O, soit un ratio SiO₂/Al₂O₃ de 40. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 10: préparation d'un solide IZM-2 selon l'invention.

150 mg d'une zéolithe de type structural FAU (CBV720, SiO₂/Al₂O₃=30, Zeolyst) ont été mélangés avec 1043,3 mg d'une solution aqueuse de dibromure de 1,6-bis (méthylpiperidinium) hexane (20,04 % en poids) préparé selon l'exemple 1. 742 mg d'eau déionisée sont ajoutés au mélange précédent, la préparation obtenue est maintenue sous agitation pendant 10 minutes. 94 mg d'une solution aqueuse à 20% en poids d'hydroxyde de sodium (98% en poids, Aldrich) sont ajoutés. Afin de favoriser la formation du solide cristallisé IZM-2, 18 mg de germes de zéolithe IZM-2 sont ajoutés dans le mélange de synthèse, ce dernier et maintenu sous agitation pendant 15 minutes. Par la suite, 70,4mg de silice colloïdale (Ludox HS40, 40% en poids, Aldrich) sont incorporés dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,0278 Al₂O₃: 0,17 RBr₂: 0,0835 Na₂O: 33,33 H₂O, soit un ratio SiO₂/Al₂O₃ de 36. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 11: préparation d'un solide IZM-2 selon l'invention.

150 mg d'une zéolithe de type structural FAU (CBV720, SiO₂/Al₂O₃=30, Zeolyst) ont été mélangés avec 2053,1 mg d'une solution aqueuse de dibromure de 1,6-bis (méthylpiperidinium) hexane (20,04 % en poids) préparé selon l'exemple 1. Le mélange est maintenu sous agitation pendant 10 minutes. 94 mg d'une solution aqueuse à 20% en poids d'hydroxyde de sodium (98% en poids, Aldrich) sont ajoutés. Afin de favoriser la formation du solide cristallisé IZM-2, 18 mg de germes de zéolithe IZM-2 sont ajoutés dans le mélange de synthèseet maintenu sous agitation pendant 15 minutes. Par la suite, 70,4mg de silice colloïdale (Ludox HS40, 40% en poids, Aldrich) sont incorporée dans le mélange de synthèse, celui-ci est maintenu sous agitation le temps nécessaire pour évaporer le solvant jusqu'à obtenir la concentration du gel désirée, c'est-à-dire une composition molaire du mélange suivante : 1 SiO₂: 0,0278 Al₂O₃: 0,33 RBr₂: 0,0835 Na₂O: 33,33 H₂O, soit un ratio SiO₂/Al₂O₃ de 36. Le mélange est ensuite transféré, après homogénéisation, dans un autoclave. L'autoclave est fermé puis chauffé pendant 6 jours à 170°C sous agitation. Le produit cristallisé obtenu est filtré, lavé à l'eau déionisée puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

### Exemple 12: préparation d'un solide IZM-2 selon l'invention.

54 mg d'une zéolithe de type structural FAU (CBV780, SiO₂/Al₂O₃=80, Zeolyst) ont été mélangés avec 1219,1 mg d'une solution aqueuse de dibromure de 1,6-bis (méthylpiperidinium) hexane (20,04 % en poids) préparé selon l'exemple 1. 558 mg d'eau déionisée sont ajoutés au mélange précédent, la préparation obtenue est maintenue sous agitation pendant 10 minutes. 217 mg d'une solution aqueuse à 20% en poids d'hydroxyde de sodium (98% en poids, Aldrich) sont ajoutés. Afin de favoriser la formation du solide cristallisé IZM-2, 5 mg de germes de zéolithe IZM-2 sont ajoutés dans le mélange de synthèse maintenu sous agitation pendant 15 minutes. Par la suite, 362,7 mg de silice colloïdale (Ludox HS40, 40% en poids, Aldrich) ont été incorporée dans le mélange de synthèse. Pour finir, 61 mg d'une solution aqueuse à 10% en poids de fluorure d'ammonium (Aldrich) sont ajoutés dans le mélange de synthèses et maintenu sous agitation le temps nécessaire pour évaporer le solvant jusqu'à obtenir la concentration du gel désirée, c'est-à-dire une composition molaire du mélange suivante : 1 SiO₂: 0,0033 Al₂O₃: 0,17 RBr₂: 0,165 Na₂O: 0,05 NH₄F: 33,33 H₂O, soit un ratio SiO₂/Al₂O₃ de 300. Le mélange est ensuite transféré, après homogénéisation, dans un autoclave. L'autoclave est fermé puis chauffé pendant 8 jours à 170°C sous agitation. Le produit cristallisé obtenu est filtré, lavé à l'eau puis séché une nuit à 100°C. Le solide est ensuite introduit dans un four à moufle où est réalisée une étape de calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

## Revendications

1. Procédé de préparation d'une zéolithe IZM-2 comprenant au moins les étapes suivantes :
i) le mélange en milieu aqueux, d'au moins une zéolithe de type structural FAU ayant un ratio molaire SiO_{2(FAU)}/Al₂O_{3(FAU)} supérieur ou égal à 30, éventuellement d'au moins une source additionnelle d'un oxyde XO₂ de sorte que le ratio molaire XO₂/SiO_{2(FAU)} soit compris entre 0 et 4, au moins un composé organique azoté R, R étant le dibromure de 1,6-bis(méthylpiperidinium)hexane, au moins un métal alcalin et/ou un métal alcalino-terreux M de valence n, n étant un entier supérieur ou égal à 1, le mélange présentant la composition molaire suivante :
| | |
|---|---|
| (XO₂ + SiO_{2(FAU)})/Al₂O_{3(FAU)} | compris entre 10 et 800, |
| H₂O/(XO₂ + SiO_{2(FAU)}) | compris entre 1 et 100, |
| R/(XO₂ + SiO_{2(FAU)} | compris entre 0,01 à 0,6, |
| M_{2/n}O/(XO₂ + SiO_{2(FAU)}) | compris entre 0,005 à 0,35, |
dans laquelle X est un ou plusieurs élément(s) tétravalent(s) choisi(s) dans le groupe formé par les éléments suivants : silicium, germanium, titane, SiO_{2 (FAU)} étant la quantité de SiO₂ apportée par la zéolithe FAU, et Al₂O_{3(FAU)} étant la quantité de Al₂O₃ apportée par la zéolithe FAU,
ii) le traitement hydrothermal dudit mélange obtenu à l'issue de l'étape i) à une température comprise entre 120°C et 200°C pendant une durée comprise entre 1 jour et 10 jours, jusqu'à ce que ladite zéolithe IZM-2 se forme.

2. Procédé selon la revendication 1 dans lequel ladite zéolithe de type structural FAU est la zéolithe Y.

3. Procédé selon l'une des revendications 1 ou 2 dans lequel la source d'au moins un métal alcalin et/ou alcalino-terreux M est l'hydroxyde de sodium.

4. Procédé selon l'une des revendications 1 à 3 dans lequel X est le silicium.

5. Procédé selon l'une des revendications 1 à 4 dans lequel, la source additionnelle d'un oxyde XO₂ est ajoutée dans l'étape i) de mélange de sorte que le ratio molaire XO₂/SiO_{2(FAU)} soit compris entre 0 et 3.

6. Procédé selon l'une des revendications 1 à 5 dans lequel le mélange réactionnel obtenu à l'étape (i) présente la composition molaire suivante :
| | |
|---|---|
| (XO₂ + SiO_{2(FAU)})/Al₂O_{3(FAU)} | compris entre 20 et 600, |
| H₂O/(XO₂ + SiO_{2(FAU)}) | compris entre 10 et 70, |
| R/(XO₂ + SiO_{2(FAU)} | compris entre 0,05 et 0,45, |
| M_{2/n}O/(XO₂ + SiO_{2(FAU)}) | compris entre 0,008 et 0,3. |

7. Procédé selon la revendication 6 dans lequel le mélange réactionnel obtenu à l'étape (i) présente la composition molaire suivante :
| | |
|---|---|
| (XO₂ + SiO_{2(FAU)})/Al₂O_{3(FAU)} | compris entre 25 et 450, |
| H₂O/(XO₂ + SiO_{2(FAU)}) | compris entre 15 et 55, |
| R/(XO₂ + SiO_{2(FAU)} | compris entre 0,085 et 0,4, |
| M_{2/n}O/(XO₂ + SiO_{2(FAU)}) | compris entre 0,01 et 0,25. |

8. Procédé selon l'une des revendications 1 à 7 dans lequel le mélange de l'étape i) contient également au moins une source d'anion fluorure BF choisie parmi les sels de fluor dans lequel B est un cation choisi parmi les cations NH₄⁺, Na⁺, K⁺ et Li⁺, et l'acide fluorhydrique en solution aqueuse.

9. Procédé selon l'une des revendications 1 à 8 dans lequel le traitement hydrothermal de l'étape ii) est réalisée à une température comprise entre 120°C et 195°C.

10. Procédé selon l'une des revendications 1 à 9 dans lequel le traitement hydrothermal de l'étape ii) est réalisée pendant une durée comprise entre 2 jours et 9 jours.

## Patentansprüche

1. Verfahren zur Herstellung eines Zeoliths IZM-2, umfassend mindestens die folgenden Schritte:
i) Mischen, in einem wässrigen Medium, mindestens eines Zeoliths des strukturellen Typs FAU mit einem Molverhältnis SiO_{2(FAU)}Al₂O_{3(FAU)} größer oder gleich 30, gegebenenfalls einer zusätzlichen Quelle eines Oxids XO₂, so dass das Molverhältnis XO₂/SiO_{2(FAU)} zwischen 0 und 4 liegt, mindestens einer organischen Stickstoffverbindung R, wobei R 1,6-Bis-(methylpiperidinium)-hexandibromid ist, mindestens eines Alkalimetalls und/oder eines Erdalkalimetalls M mit der Valenz n, wobei n eine ganze Zahl größer oder gleich 1 ist, wobei die Mischung die folgende Molzusammensetzung aufweist:
| | |
|---|---|
| (XO₂ + SiO_{2(FAU)})/Al₂O_{3(FAU)} | zwischen 10 und 800, |
| H₂O(XO₂ + SiO_{2(FAU)}) | zwischen 1 und 100, |
| R/(XO₂ + SiO_{2(FAU)}) | zwischen 0,01 bis 0,6, |
| M_{2/n}O/(XO₂ + SiO_{2(FAU)}) | zwischen 0,005 bis 0,35, |
wobei X ein oder mehrere dreiwertige Elemente ist, ausgewählt aus der Gruppe gebildet von den folgenden Elementen: Silicium, Germanium, Titan, wobei SiO_{2(FAU)} die Menge an SiO₂ ist, die von dem Zeolith FAU eingebracht wird, und Al₂O_{3(FAU)} die Menge an Al₂O₃ ist, die von dem Zeolith FAU eingebracht wird,
ii) hydrothermisches Behandeln der am Ende von Schritt i) erhaltenen Mischung bei einer Temperatur zwischen 120 °C und 200 °C während einer Dauer zwischen 1 Tag und 10 Tagen, bis sich der Zeolith IZM-2 bildet.

2. Verfahren nach Anspruch 1, wobei der Zeolith des strukturellen Typs FAU der Zeolith Y ist.

3. Verfahren nach einem der Ansprüche 1 oder 2, wobei die Quelle des mindestens einen Alkalimetalls und/oder Erdalkalimetalls M Natriumhydroxid ist.

4. Verfahren nach einem der Ansprüche 1 bis 3, wobei X Silicium ist.

5. Verfahren nach einem der Ansprüche 1 bis 4, wobei die zusätzliche Quelle eines Oxids XO₂ in dem Schritt i) der Mischung derart zugesetzt wird, dass das Molverhältnis XO₂/SiO_{2(FAU)} zwischen 0 und 3 liegt.

6. Verfahren nach einem der Ansprüche 1 bis 5, wobei die Reaktionsmischung, die in dem Schritt (i) erhalten wird, die folgende Molzusammensetzung aufweist:
| | |
|---|---|
| (XO₂ + SiO_{2(FAU)})/Al₂O_{3(FAU)} | zwischen 20 und 600, |
| H₂O(XO₂ + SiO_{2(FAU)}) | zwischen 10 und 70, |
| R/(XO₂ + SiO_{2(FAU)}) | zwischen 0,05 und 0,45, |
| M_{2/n}O/(XO₂ + SiO_{2(FAU)}) | zwischen 0,008 und 0,3. |

7. Verfahren nach Anspruch 6, wobei die Reaktionsmischung, die in dem Schritt (i) erhalten wird, die folgende Molzusammensetzung aufweist:
| | |
|---|---|
| (XO₂ + SiO_{2(FAU)})/Al₂O_{3(FAU)} | zwischen 25 und 450, |
| H₂O(XO₂ + SiO_{2(FAU)}) | zwischen 15 und 55, |
| R/(XO₂ + SiO_{2(FAU)}) | zwischen 0,085 und 0,4, |
| M_{2/n}O/(XO₂ + SiO_{2(FAU)}) | zwischen 0,01 und 0,25. |

8. Verfahren nach einem der Ansprüche 1 bis 7, wobei die Mischung von Schritt i) auch mindestens eine Fluoridanionenquelle BF enthält, ausgewählt aus Fluorsalzen, wobei B ein Kation ist, ausgewählt aus den Kationen NH₄⁺, Na⁺, K⁺ und Li⁺, und Fluorwasserstoffsäure in wässriger Lösung.

9. Verfahren nach einem der Ansprüche 1 bis 8, wobei die hydrothermische Behandlung in dem Schritt ii) bei einer Temperatur zwischen 120 °C und 195 °C durchgeführt wird.

10. Verfahren nach einem der Ansprüche 1 bis 9, wobei die hydrothermische Behandlung in dem Schritt ii) während einer Dauer zwischen 2 Tagen und 9 Tagen durchgeführt wird.

## Claims

1. A process for the preparation of an IZM-2 zeolite, comprising at least the following steps:
i) mixing, in an aqueous medium, at least one zeolite with structure type FAU having a molar ratio SiO_{2(FAU)}/Al₂O_{3(FAU)} of greater than or equal to 30, eventually at least one additional source of an oxide XO₂ in a manner such that the molar ratio XO₂/SiO_{2(FAU)} is in the range 0 to 4, at least one nitrogen-containing organic compound R, R being 1,6-bis(methylpiperidinium)hexane dibromide, and at least one alkali metal and/or alkaline-earth metal M with valency n, where n is a whole number greater than or equal to 1, the mixture having the following molar composition:
| | |
|---|---|
| (XO₂ + SiO_{2(FAU)})/Al₂O_{3(FAU)} | in the range 10 to 800, |
| H₂O/(XO₂ + SiO_{2(FAU)}) | in the range 1 to 100, |
| R/(XO₂ + SiO_{2(FAU)}) | in the range 0.01 to 0.6, |
| M_{2/n}O/(XO₂ + SiO_{2(FAU)}) | in the range 0.005 to 0.35, |
in which X is one or more tetravalent element(s) selected from the group formed by the following elements: silicon, germanium, and titanium, SiO_{2(FAU)} being the quantity of SiO₂ supplied by the FAU zeolite, and Al₂O_{3(FAU)} being the quantity of Al₂O₃ supplied by the FAU zeolite,
ii) hydrothermal treatment of said mixture obtained from step i) at a temperature in the range 120°C to 200°C for a period in the range 1 day to 10 days, until said IZM-2 zeolite has been formed.

2. The process as claimed in claim 1, in which said zeolite with structure type FAU is Y zeolite.

3. The process as claimed in claim 1 or claim 2, in which the source of at least one alkali and/or alkaline-earth metal M is sodium hydroxide.

4. The process as claimed in one of claims 1 to 3, in which X is silicon.

5. The process as claimed in one of claims 1 to 4, in which the additional source of an oxide XO₂ is added in the mixing step i) in a manner such that the molar ratio XO₂/SiO_{2(FAU)} is in the range 0 to 3.

6. The process as claimed in one of claims 1 to 5, in which the reaction mixture obtained in step i) has the following molar composition:
| | |
|---|---|
| (XO₂ + SiO_{2(FAU)})/Al₂O_{3(FAU)} | in the range 20 to 600, |
| H₂O/(XO₂ + SiO_{2(FAU)}) | in the range 10 to 70, |
| R/(XO₂ + SiO_{2(FAU)}) | in the range 0.05 to 0.45, |
| M_{2/n}O/(XO₂ + SiO_{2(FAU)}) | in the range 0.008 to 0.3. |

7. The process as claimed in claim 6, in which the reaction mixture obtained in step i) has the following molar composition:
| | |
|---|---|
| (XO₂ + SiO_{2(FAU)})/Al₂O_{3(FAU)} | in the range 25 to 450, |
| H₂O/(XO₂ + SiO_{2(FAU)}) | in the range 15 to 55, |
| R/(XO₂ + SiO_{2(FAU)}) | in the range 0.085 to 0.4, |
| M_{2/n}O/(XO₂ + SiO_{2(FAU)}) | in the range 0.01 to 0.25. |

8. The process as claimed in one of claims 1 to 7, in which the mixture of step i) also contains at least one source of a fluoride anion BF selected from fluorine salts, in which B is a cation selected from the cations NH₄⁺, Na⁺, K⁺ and Li⁺, and hydrofluoric acid in aqueous solution.

9. The process as claimed in one of claims 1 to 8, in which the hydrothermal treatment of step ii) is carried out at a temperature in the range 120°C to 195°C.

10. The process as claimed in one of claims 1 to 9, in which the hydrothermal treatment of step ii) is carried out for a period in the range 2 days to 9 days.
